# EUROPEAN PATENT APPLICATION

(11) **EP 4 800 361 A1**
(43) Date of publication of application: **02.09.2026**
(21) Application number: 26159135.8
(22) Date of filing: 17.02.2026
(51) Int. Cl.: G01K 7/20

(54) **SYSTEM AND METHOD FOR ANALYZING A MICROVOLUME SAMPLE**

(30) Priority: 27.02.2025 US 202563764088 P
(71) Applicant: Thermo Electron Scientific Instruments LLC, Madison, WI 53711 (US)
(72) Inventor: EICHORST, John P., Madison, 53711 (US); DECK, Francis J., Madison, 53711 (US)
(74) Representative: Boult Wade Tennant LLP

(57) **Abstract**

A system to measure the temperature of a sample using two measurements of the sample's conductivity is described herein. The system includes a first surface, a second surface, and an electronic processing unit. The second surface is positioned opposite the first surface for holding the sample between the first surface and the second surface by surface tension. The electronic processing unit is configured to apply at least one electrical signal across the sample via a first electrode and a second electrode, determine, based on the at least one electrical signal applied across the sample, a first conductivity of the sample at a first frequency associated with the at least one electrical signal and a second conductivity of the sample at a second frequency associated with the at least one electrical signal, and determine, based on the first conductivity and the second conductivity, a temperature of the sample.

## Description

### FIELD OF THE INVENTION

The present disclosure relates generally to systems and methods for analyzing liquid samples, and more particularly to systems and methods for determining a temperature of a microvolume liquid sample using electrochemical measurements.

### BACKGROUND INFORMATION

Microvolume analytic devices are important tools in clinical and research implementations to facilitate analysis of one or more properties of a liquid sample. Through such microvolume analytic devices, it is possible to quickly and easily understand various properties of the liquid sample, such as the quantity and/or purity of a liquid sample. For example, a microvolume analytic device may be configured to perform a nucleic acid and protein quantification assessment with respect to a liquid sample. Although various different types of microvolume analytic devices have been developed to make such assessments, there remains room to improve the use and/or design of microvolume analytic devices to facilitate analysis of one or more properties of a liquid sample.

### SUMMARY

An example system for analyzing a sample comprises a first surface including at least a part of a first electrode; a second surface including at least a part of a second electrode, the second surface positioned opposite the first surface for holding the sample between the first surface and the second surface by surface tension; and an electronic processing unit configured to: apply at least one electrical signal across the sample via the first electrode and the second electrode; determine, based on the at least one electrical signal applied across the sample, a first conductivity of the sample at a first frequency associated with the at least one electrical signal and a second conductivity of the sample at a second frequency associated with the at least one electrical signal; and determine, based on the first conductivity and the second conductivity, a temperature of the sample.

An example computer program product embodied in a non-transitory computer readable storage medium and comprising computer instructions for performing a process. The process comprises determining that a sample is positioned between a first surface and a second surface, wherein the sample is held between the first and second surfaces via surface tension; applying at least one electrical signal across a sample via a first electrode associated with the first surface and a second electrode associated with the second surface; determining, based on the at least one electrical signal applied across the sample, a first conductivity of the sample at a first frequency associated with the at least one electrical signal and a second conductivity of the sample at a second frequency associated with the at least one electrical signal; and determining, based on the first conductivity and the second conductivity, a temperature of the sample.

An example method for measuring an electrochemical property of a sample, comprises: providing a sample positioned between a first surface and a second surface of a sample analytic system, wherein the sample is held between the first and second surfaces via surface tension; applying, by the sample analytic system, at least one electrical signal across a sample via first electrode associated with the first surface and a second electrode associated with the second surface; determining, by the sample analytic system and based on the at least one electrical signal applied across the sample, a first conductivity of the sample at a first frequency associated with the at least one electrical signal and a second conductivity of the sample at a second frequency associated with the at least one electrical signal; determining, by the sample analytic system and based on the first conductivity and the second conductivity, a temperature of the sample; determining, by the sample analytic system, an electrochemical property of the sample; and generating, by the sample analytic system, a value representing the electrochemical property of the sample at a baseline temperature based on the determined electrochemical property and the determined temperature of the sample.

It should be understood that the summary above is provided to introduce in simplified form a selection of concepts that are further described in the detailed description. It is not meant to identify key or essential features of the claimed subject matter, the scope of which is defined uniquely by the claims that follow the detailed description.

### BRIEF DESCRIPTION OF THE DRAWINGS

The accompanying drawings illustrate various implementations and are a part of the specification. The illustrated implementations are merely examples and do not limit the scope of the disclosure. Throughout the drawings, identical or similar reference numbers designate identical or similar elements.
FIG. 1 illustrates an example sample analytic system according to principles described herein.
FIG. 2A illustrates an example liquid analysis system that may be implemented by the sample analytic system of FIG. 1 according to principles described herein.
FIG. 2B illustrates an example block diagram of a controller that may be included in the liquid analysis system of FIG. 2A according to principles described herein.
FIG. 3 illustrates another example liquid analysis system that may be implemented by the sample analytic system of FIG. 1 and that includes a visible light-emitting device according to principles described herein.
FIG. 4 illustrates an example circuit diagram that may be implemented according to principles described herein.
FIGS. 5A and 5B illustrate example voltage traces that may be implemented according to principles described herein.
FIG. 6A illustrates an example cycle of a voltage trace that may be implemented according to principles described herein.
FIGS. 6B and 6C illustrate example Fourier decomposition components of the voltage trace illustrated in FIG. 6A according to principles described herein.
FIG. 7 illustrates an example chart depicting conductivity of different solutions based on frequency and two temperatures according to principles described herein.
FIG. 8 illustrates an example chart that depicts a conductivity difference analysis that may be implemented according to principles described herein.
FIG. 9 illustrates an example chart depicting conductivity of different solutions based on frequency and three temperatures according to principles described herein.
FIG. 10 illustrates an example flow diagram including operations that may be performed according to principles described herein.
FIG. 11 illustrates an example graphical user interface (GUI) view that may be displayed while performing a measurement process according to principles described herein.
FIG. 12 illustrates an example method for analyzing a microvolume sample according to principles described herein.
FIG. 13 illustrates an example computing device according to principles described herein.

### DETAILED DESCRIPTION

Samples in pharmaceutical research such as purified proteins and DNA are often produced in low quantity following time-consuming and expensive procedures. The ion concentration and pH of the buffers in which these samples are maintained need to be carefully controlled to avoid degradation of the sample and ensure the success of downstream processes such as PCR and gels. The sample's concentration may be determined from measurements of the UV-VIS absorbance. Spectrophotometers designed to be used with fiber optics has made it possible to measure optical property of samples of microvolume, such as samples in the volume range of 0.25 microliters to 10 microliters. Such spectrophotometers use the surface tension of the liquid sample to confine the sample during optical analysis. Examples of the spectrophotometers are disclosed in U.S. Patents US6809826B2 and US6628382B2, the entire contents of both are hereby incorporated by reference in their entirety. Patent application WO2024173752A1, which is incorporated herein by reference in its entirety, further discloses method and system for measuring electrochemical property of the microvolume sample.

Applicant recognizes that the measurement of the sample's electrochemical property, such as the pH or conductivity, varies with the sample temperature. Therefore, precise temperature measurement is necessary for interpreting the electrochemical property measurement.

Systems and methods for analyzing a microvolume sample are described herein. As will be described in more detail below, an illustrative system for analyzing a sample comprises a first surface including at least a part of a first electrode; a second surface including at least a part of a second electrode, the second surface positioned opposite the first surface for holding the sample between the first surface and the second surface by surface tension; and an electronic processing unit configured to: apply at least one electrical signal across the sample via the first electrode and the second electrode; determine, based on the at least one electrical signal applied across the sample, a first conductivity of the sample at a first frequency associated with the at least one electrical signal and a second conductivity of the sample at a second frequency associated with the at least one electrical signal; and determine, based on the first conductivity and the second conductivity, a temperature of the sample.

As such, the temperature of a microvolume sample may be determined based on conductivity measurement at two different frequencies. The sample temperature can be determined in parallel with and/or immediately next to the optical and/or electrochemical measurements of the same microvolume sample, without the need for physical temperature sensors.

Various advantages and benefits are associated with systems and methods described herein. For example, systems and methods such as those described herein facilitate determining a temperature of a microvolume sample in conjunction with or in parallel with other properties such as pH and conductivity. In so doing, it is possible to report the electrochemical property of the sample as if the sample was measured at the standard (or baseline) temperature of 25°C. In addition, systems and methods such as those described herein facilitate measuring temperature of a sample without requiring modification (e.g., without adding a dedicated temperature sensor and/or without obstructing light paths or other components) of a sample analytic device. Moreover, systems and methods such as those described herein may determine the temperature of a sample in an automatic fashion without requiring user input. These and other benefits that may be realized by the systems and methods described herein will be evident from the disclosure that follows.

The systems and methods described herein take advantage of the fact that the measured conductivity of many samples varies not only with temperature, but also with the frequency of an electrical signal applied to a sample. Accordingly, to determine the temperature of a sample, the system may analyze measurements of conductivity at a plurality of different frequencies of an applied electrical signal across a sample. To that end, the system may apply an electrical signal across the sample via the first electrode and the second electrode. The system may apply the electrical signal across the electrode in any suitable manner. For example, the applying of the electrical signal may include applying an AC signal across the sample. The AC signal may have any suitable form, voltage value, and/or oscillation frequency as may serve a particular implementation. For example, the AC signal may be a 20kHz AC square wave with a 0V offset and a peak to peak voltage of 6V in certain implementations.

Based on the at least one electrical signal applied across the sample, the system may determine a first conductivity of the sample at a first frequency associated with the at least one electrical signal and a second conductivity of the sample at a second frequency associated with the at least one electrical signal. This may be accomplished in any suitable manner. In certain implementations, the system may determine the first conductivity and the second conductivity concurrently by applying an electrical signal including multiple frequency components. That is, the first conductivity and the second conductivity may be determined based on a single electrical signal applied across the sample. The single electrical signal may include multiple frequency components, and the first frequency and the second frequency are two of the multiple frequency components. Frequency components refer to distinct sinusoidal frequency elements present in an electrical signal applied to or measured from a sample, including a fundamental frequency and one or more harmonic frequencies, that can be identified by frequency-domain analysis of the signal. In one example, the second frequency is the harmonic of the first frequency. Alternatively, system 100 may determine the first conductivity at a first time based on a first electrical signal and the second conductivity at a second time subsequent to the first time based on a second electrical signal.

In one example, the second frequency is higher than the first frequency. The second frequency is greater than 50kHz, and the first frequency is not greater than 50kHz. The difference between the first and second frequencies may be over 20kHz. In another example, the second, higher frequency is not less than 60kHz, and the difference between the first and second frequencies is not less than 30kHz or 40kHz. By setting the second frequency at a higher frequency, the second conductivity measurement is less sensitive to the frequency (i.e., the change rate of the conductivity over frequency is less). As such, the second conductivity can be directly used for determining the sample's conductivity at the determined temperature. By increasing the difference between the first and second frequencies, the temperature of the sample can be estimated with higher accuracy.

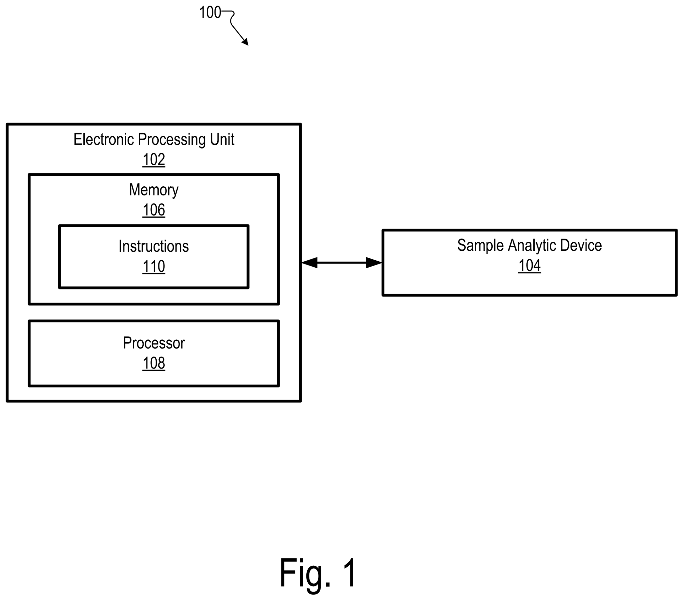

FIG. 1 illustrates an exemplary sample analytic system 100 ("system 100") that may be implemented according to principles described herein. As shown, system 100 may include, without limitation, an electronic processing unit 102 communicatively coupled to a sample analytic device 104. System 100 may be implemented in any suitable manner. For example, as shown, electronic processing unit 102 and sample analytic device 104 may be implemented by separate devices that are communicatively coupled with one another by way of any suitable wired and/or wireless communication protocol. In some alternative implementations, electronic processing unit 102 may be included within sample analytic device 104. Illustrative implementations of system 100 are described herein.

Electronic processing unit 102 may be implemented by one or more computing devices that have processing capabilities, such as one or more desktop computers, controllers, mobile devices (e.g., smartphones, tablet computers), etc. As shown, electronic processing unit 102 includes a memory 106 and a processor 108 selectively and communicatively coupled to one another. Memory 106 and processor 108 may each include or be implemented by hardware and/or software components (e.g., processors, memories, communication interfaces, instructions stored in memory for execution by the processors, etc.).

Memory 106 may maintain (e.g., store) executable data used by processor 108 to perform any of the operations described herein. For example, memory 106 may store instructions 110 that may be executed by processor 108 to perform any of the operations described herein. Instructions 110 may be implemented by any suitable application, software, code, and/or other executable data instance.

Memory 106 may also maintain any data received, generated, managed, used, and/or transmitted by processor 108. Memory 106 may store any other suitable data as may serve a particular implementation. For example, memory 106 may store measurement data (e.g., pH data, optical property data, sample concentration data, sample volume data, conductivity data, temperature data, etc.), image data, calibration data, user interface content, and/or any other suitable data.

Processor 108 may be configured to perform (e.g., execute instructions 110 stored in memory 106 to perform) various processing operations associated with analyzing a microvolume sample using components of sample analytic device 104. For example, processor 108 may perform one or more operations described herein automatically determine a temperature of a sample based on a plurality of conductivity measurements. As used herein, the expression "automatically" means that an operation (e.g., an operation of analyzing a sample) or series of operations are performed without requiring further input from a user. For example, loading a sample in sample analytic device 104 may trigger automatic determination of one or more properties of the sample without requiring further input from the user or any additional user. These and other operations that may be performed by processor 108 are described herein.

Processor 108 may be configured to execute a computer program to perform any of the operations described herein. A computer program may be written in any form of programming language including compiled and/or interpreted languages, and may be deployed in any form, including as a stand-alone program or as a module, component, subroutine, or other unit suitable for use in a computing environment. A computing program may be deployed to be executed by processor 108 at one site or distributed across multiple sites and interconnected by a network.

Sample analytic device 104 may be implemented by any suitable device, apparatus, or system having components that may be used to analyze one or more microvolume samples. For example, sample analytic device 104 may be implemented by a spectrophotometer. Examples of spectrophotometers are disclosed in U.S. Patents US6809826B2 and US6628382B2, the entire contents of both are hereby incorporated by reference in their entirety.

Sample analytic device 104 may use the confinement of the sample by surface tension to measure one or more properties of a liquid sample. The liquid sample may have, for example, a volume of 0.25 microliters to 10 microliters, or any other suitable volume. The properties may include physical properties, electrochemical properties, and/or optical properties, such as sample volume, temperature, electrical conductivity, pH level, optical density, optical absorbance, optical transmission, fluorescence, etc.

In certain examples, a plurality of different properties may be concurrently or sequentially measured by system 100 while a sample is provided in sample analytic device 104. For example, system 100 may sequentially measure a first property (e.g., an optical property), then a second property (e.g., a first electrochemical property such as pH level) of the sample, then a third property (e.g., a second electrochemical property such as conductivity), and then a fourth property (e.g., a temperature of the sample).

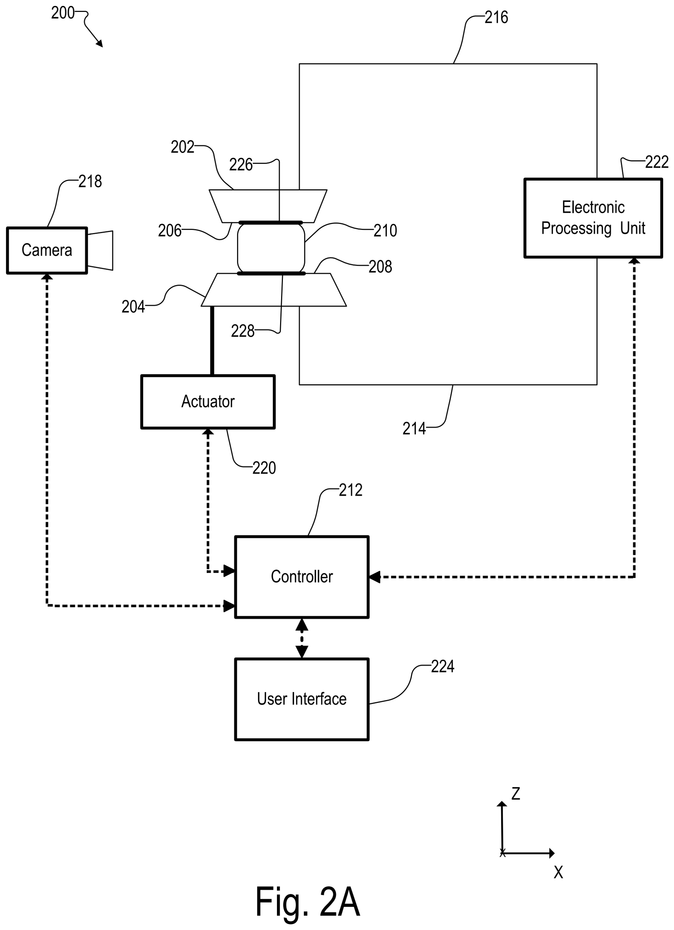

FIG. 2A illustrates a liquid analysis system 200 ("system 200") in which system 100 may be implemented in certain examples. As illustrated in FIG. 2A, liquid analysis system 200 includes pedestals 202 and 204, a sample facing surface 206 of pedestal 202 and a sample facing surface 208 of pedestal 204 configured to hold a sample 210 of a microvolume liquid, a controller 212, electrical connections (e.g., wires) 214 and 216, a camera 218, an actuator 220 (e.g., one or more stepper motors and one or more associated lead screws), and an electronic processing unit 222. Various components shown in FIG. 2A may be similar to and/or implement components shown in FIG. 1. For example, electronic processing unit 222 may be an implementation of electronic processing unit 102, and various other components shown in FIG. 2A may be an implementation of sample analytic device 104. System 200 may be used to measure one or more properties of sample 210 via one or more of the methods described herein. System 200 may be positioned vertically so that the first and second surfaces are horizontal (in X-Y plane).

In some implementations, the components of system 200 illustrated in FIG. 2A may be included in a common housing forming an instrument or device. However, in other implementations, one or more components of system 200 may be contained in separate housings or devices and may be coupled (e.g., communicatively, electrically, mechanically, or the like) as needed to carry out the methods described herein. It is understood that the functionality described herein as being performed by the components of system 200 may be combined and distributed in various ways. For example, in some implementations, electronic processing unit 222 may be part of controller 212, wherein controller 212 is configured to perform the functionality of electronic processing unit 222 as described herein. Furthermore, the functionality described herein as being performed by controller 212 may be distributed among multiple controllers 212. Liquid analysis system 200 may also include additional components (such as power components), a user interface 224 (such as a display and/or user input device), a housing, and the like.

In addition, in some implementations, although the sample facing surfaces 206 and 208 are illustrated in FIG. 2A as being positioned horizontally (e.g., to establish an upper surface and a lower surface), it should be understood that other orientations are possible, such as, for example, a vertical orientation wherein sample facing surfaces 206 and 208 establish a left surface and a right surface. Accordingly, although implementations may be described herein with respect to an upper and lower surface, implementations described here may similarly be applied to systems including two surfaces in other orientations.

As illustrated in FIG. 2A, sample 210 is loaded onto one of the sample-facing surface 206 or 208, such as, for example, the sample facing surface 206 of pedestal 202, with a pipette. Sample 210, when emptied from the pipette and if the droplet has sufficient volume, will spread to cover the sample facing surface 206 until it encounters an edge of the sample facing surface 206 or 208, such as, for example, an edge of sample facing surface 206. Sample 210 is contained by surface tension between sample facing surface 206 of pedestal 202 and sample facing surface 208 of pedestal 204. In some implementations, 2 microliters of a water-based solution may effectively cover an area of one or both of sample facing surfaces 206 and 208 having approximately a 2-millimeter diameter. Alternatively, the spread of sample 210 may be limited by a change in the surface tension characteristic. For example, in some implementations, a polymer surface of a material may be used to limit the spread of the solution.

Using one or more actuator(s) 220 (such as, for example, one or more stepper motors), pedestal 202 is brought into a measurement position and, optionally, then into close proximity to pedestal 204, making contact with deposited sample 210 and wetting the entire confining surface before returning to a sample measurement position. Actuator 220 herein is shown mechanically coupled to lower pedestal 204 for adjusting sample facing surface 208. It is understood that actuator 220 may be mechanically coupled to a cap to which pedestal 204 is engaged. In some examples, actuator 220 may instead be coupled to pedestal 202 and/or a cap to which pedestal 202 is engaged. In some examples, each of pedestals 202 and 204 may be coupled with an actuator.

In some examples, sample facing surfaces 206 and 208 may have roughly identical areas. Alternatively, sample facing surfaces 206 and 208 may have different areas. For example, in some implementations, sample facing surface 208 may be larger than sample facing surface 206 to provide a larger loading target. When two different sizes of surfaces are used and when the smaller surface is brought into sample compression position, sample 210 may be pulled into the gap between pedestals 202 and 204 by capillary action. In this configuration, the diameter of the smaller surface may center the sample between sample facing surface 206 and sample facing surface 208.

In some examples, the sample facing surfaces 206 and 208 may be flat surfaces positioned horizontally for holding sample 210. In other implementations, one or both of sample facing surfaces 206 and 208 may have a curved surface. Using a curved surface may assist in positioning sample 210 between sample facing surfaces 206 and 208, and, in some implementations, may assist in creating a consistent shape of sample 210.

To measure an electrochemical property of the liquid sample (e.g., conductivity), sample facing surfaces 206 and 208 may be used as a two-pole conductivity meter. In particular, each of sample facing surface 206 and sample facing surface 208 may include at least a portion that is electrically conductive. In some examples, the entire surface 206, the entire sample facing surface 208, or both may be electrically conductive. Such conductive portions 226 and 228 may act as electrodes for passing and receiving electrical signals to and from sample 210 that is in direct contact with the conductive portions. Herein, such conductive portions 226 and 228 are also referred to as electrodes. Conductive portions 226 and 228 may be metal surfaces with a diameter between 1 millimeter and 3 millimeters, such as, for example, 2.5 millimeters. One or both of conductive portions 226 and 228 may be hydrophobic. For example, in some implementations, one or both of conductive portions 226 and 228 may be coated with a hydrophobic substance coating or a laser treatment may be applied to the surface to make it hydrophobic. In some examples, a portion of each of sample facing surfaces 206 and 208 may be electrically coupled to electronic processing unit 222 via connections 214 and 216.

The separation distance between sample facing surfaces 206 and 208 (and, hence, electrodes 226 and 228) may be controlled by moving, vertically, the position of one or more of sample facing surfaces 206 and 208 (for example, via moving one or more of pedestals 202 and 204). For example, the bottom pedestal 204 may be moved via operating actuator 220.

Electronic processing unit 222 is configured to measure electrical signals via one or both of electrodes 226 and 228 associated with pedestals 202 and 204 and, in some implementations, is also configured to apply an oscillating (AC) voltage to sample 210 via one or more both of electrodes 226 and 228.

For example, in some implementations, electronic processing unit 222 includes an electrical signal generator. Electronic processing unit 222 may include a circuit board for reading measured electrical signals (e.g., AC signals) from electrodes 226 and 228 (and optionally applying electrical signals via the electrodes) and software or firmware associated with the board may be configured to translate voltages directly into electrochemical parameters (e.g., conductivity values) that be communicated to other components of system 200. In other implementations, rather than translating voltage directly into electrochemical parameters, electronic processing unit 222 may process voltages into one or more intermediary or filtered value, which may be communicated to controller 212 for further processing, including, for example, determination of an electrochemical property of sample 210. In some implementations, electronic processing unit 222 may include an electronic processor (e.g., a microprocessor), which may instruct the signal generator, process measured electrical signals, or a combination thereof. For example, to measure the conductivity of sample 210, electrical signals may be measured by one or both of electrodes 226 and 228 while an oscillating (AC) voltage is applied to the sample positioned between the two flat metal surfaces via one or more of electrodes 226 and 228.

Camera 218 is positioned to capture one or more images of pedestals 202 and 204, such as, for example, at least a portion of sample facing surface 206 and sample facing surface 208 and the separation between these sample facing surfaces 206 and 208, including any sample positioned between sample facing surfaces 206 and 208. Images captured via camera 218 may be used to identify actuator positions (or stepper motor positions) for one or more separation distances, a volume of a sample positioned between sample facing surfaces 206 and 208, or a combination thereof. In some examples, liquid analysis system 200 may include a light source for illuminating sample 210 while capturing the images by camera 218.

As described above, actuator 220 is configured to move at least one of sample facing surface 206 and sample facing surface 208 (i.e., at least one of pedestals 202 and 204). As also noted above, in some implementations, system 200 includes multiple actuators 220. In some implementations, actuator 220 may include one or more stepper motors.

In certain examples, system 200 may further include caps (not shown) that may be removably attached to each of pedestals 202 and 204. For example, a first cap may be removably attached to pedestal 202 and a second cap may be removably attached to pedestal 204. Such caps may have conductive material coatings that facilitate detecting a pH level of sample 210. For example, the first cap may have a metal oxide coating (e.g., a ZnO coating) and the second cap may have a silver chloride (AgCl) coating.

Controller 212 is configured to communicate with the electronic processing unit 222 to receive measured electrical signals and, in some implementations, to send commands to the electronic processing unit 222 for applying electrical signals via electrodes 226 and 228. Controller 212 is configured to communicate with camera 218 to send commands to camera 218 to capture images and receive the captured images. As also illustrated in FIG. 2A, controller 212 is further configured to communicate with actuator 220 to send commands to actuator 220 and receive position information from actuator 220 (e.g., a number of motor steps). Controller 212 may communicate with electronic processing unit 222, camera 218, and actuator 220 via a wired connection, wireless connection, or a combination thereof.

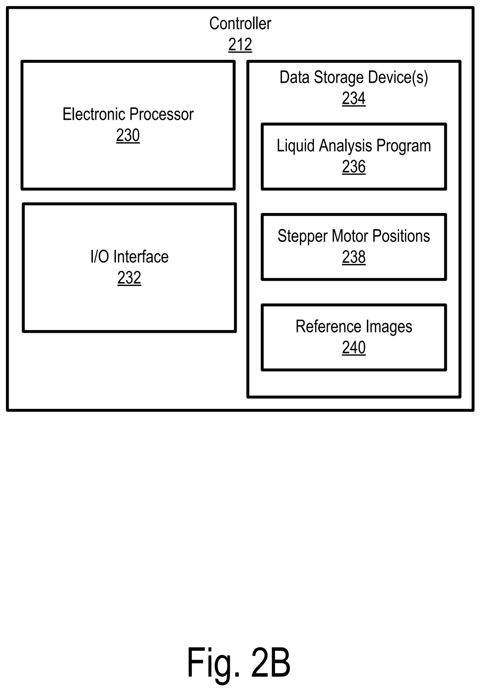

As illustrated in FIG. 2B, controller 212 may include an electronic processor 230, an input/output (I/O) interface 232, and a data storge device 234. However, it should be understood that controller 212 may have additional or fewer components as suitable for the application and setting, such as, for example, multiple electronic processors, multiple I/O interfaces, multiple data storage devices, or a combination thereof. In some implementations, some or all of the components included in controller 212 may be attached to one or more motherboards and enclosed in a housing (e.g., including plastic, metal, and/or other materials). In some implementations, some of these components may be fabricated onto a single system-on-a-chip (SoC) (e.g., an SoC may include one or more processing devices and one or more storage devices).

As used herein, "processor" or "electronic processor" refers to any device or portion of a device that processes electronic data from registers and/or memory to transform that electronic data into other electronic data that may be stored in registers and/or memory.

Data storage device 234 may include one or more memory devices such as random-access memory (RAM) devices, hard drive-based memory devices, solid-state memory devices, networked drives, cloud drives, or any other memory devices. In some implementations, data storage device 234 may include non-transitory computer readable media having instructions thereon that, when executed by one or more processors (e.g., processor 230), causes controller 212 to perform any appropriate ones or portions of the methods disclosed herein. For example, one or more data storage devices 234 included in controller 212 may store various applications and data for performing one or more of the methods described herein or portions described herein. For example, one or more data storage devices 234 may store a liquid analysis program 236, stepper motor positions 238 used to position pedestals 202 and 204 at a plurality of different separation distances, reference images 240 used by one or more of the described methods, or a combination thereof. It should be understood that each method described herein may be implemented via one application or multiple applications.

I/O interface 232 of controller 212 may include one or more communication chips, connectors, and/or other hardware and software to govern communications between controller 212 and other components such as user interface 224.

In some implementations, liquid analysis system 200 provides a stand-alone or dedicated instrument or device (or set of instruments or devices) configured to measure an electrochemical property of a liquid sample. However, in other implementations, a liquid analysis system may be configured to perform additional measurements or analysis of a liquid sample, including, for example, additional measurements or analysis of sample's physical properties and/or optical properties. Combining such measurements or analysis in one system (e.g., one instrument) creates efficiencies and more accurate analysis as multiple measurements may be taken on the same sample without having to change the position of the sample, move the sample to a different instrument, or use a separate sample of the same solution in a different instrument, all of which may introduce delays and potentials for contamination or unintended variances between measurements.

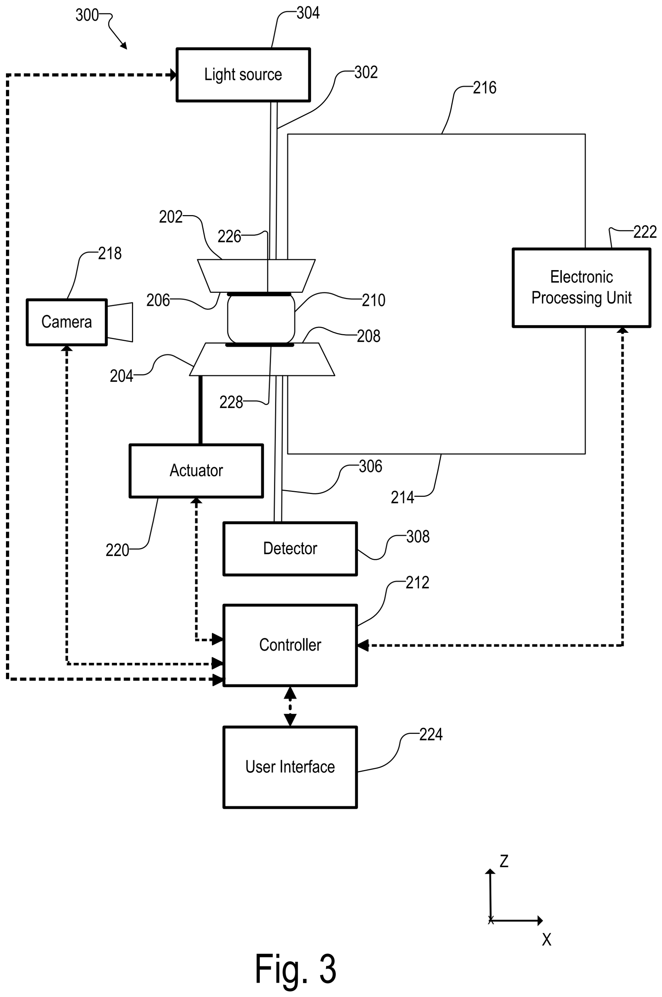

FIG. 3 illustrates another liquid analysis system 300 ("system 300") in which system 100 may be implemented in certain examples. System 300 may measure both electrochemical and optical properties of the same sample positioned between the surfaces. In some examples, measurements of the electrochemical and optical properties may be conducted simultaneously. As illustrated in FIG. 3, liquid analysis system 300 includes similar components as liquid analysis system 200, as described above. In particular, system 300 includes pedestals 202 and 204 and sample facing surfaces 206 and 208 for holding sample 210 via surface tension, controller 212, one or more electrical connections (e.g., wires) 214 and 216, camera 218, first electrode 226 and second electrode 228, actuator 220 (e.g., one or more stepper motors), and electronic processing unit 222. Accordingly, with these components, system 300 is configured to perform electrochemical measurements and analysis such as described herein.

However, as illustrated in FIG. 3, liquid analysis system 300 also includes a first optical fiber 302 connected to a light source 304, and a second optical fiber 306 connected to a detector 308. Optical fibers 302 and 306 may have endings that are a part of sample facing surfaces 206 and 208. One fiber is the source, and the other fiber is the receiver. The optical fibers may be mounted coaxially with and perpendicular to the parallel surfaces. For example, in this configuration, the liquid analysis system 300 may include a detector. The detector may include a spectrograph for splitting the light based on its wavelengths. Such an instrument is configured to quantitatively measure the reflection or other optical transmission property of a sample, which may be used to determine the amount of a particular compound in a sample.

In certain examples, optical fibers 302 and 306 may be replaced by miniature sources like light emitting diodes (LEDs). Small solid-state detectors with associated filters like those used in color charge coupled devices (CCDs) for imaging may replace the receiving fiber and detector.

Combining the electrochemical measurement and analysis described herein with the optical-based measurements provided by such an optical instrument facilitates different types of measurements to be performed on the same sample positioned within the instrument, which, as noted above, introduces efficiencies and improved data collection and associated processing.

It should be understood that although implementations are described herein as being used with a spectrophotometer or other optical instrument, implementations may be constructed as stand-alone devices for measuring an electrochemical property (e.g., conductivity) of a microvolume liquid sample (i.e., without optical instrument components). Furthermore, although some implementations are described herein with respect to measuring temperature of a sample, the methods and systems described herein may be used to also measure other electrochemical properties, such as, for example, a conductivity, a resistance, a pH, or the like of the sample.

It should be understood that the measurement methods described herein may be performed via various types of optical measurement instruments for detecting an optical property of the liquid sample positioned between sample facing surface 206 and sample facing surface 208 and is not limited to the example system illustrated in FIG. 3 or example types or brands of such instruments described herein. For example, as noted above, in some implementations, the optical fibers may be replaced by miniature sources like LEDs and detectors (e.g., solid-state detectors) with optical filters. Also, as noted above, in some implementations, the optical measurement device may have different surface orientations for holding sample 210, including, for example, a vertical orientation. It should also be understood that, in some implementations, the detection of an optical property of sample 210 positioned between sample facing surfaces 206 and 208 may occur simultaneously with at least some portions of the measurement methods described herein, which may provide further efficiencies in sample analysis.

With respect to the example liquid analysis system 300 in FIG. 3, light from light source 304 may travel through first optical fiber 302 positioned in pedestal 202 where the light radiates downward through sample 210 and is collected by second optical fiber 306, which may act as a light pipe. It should be understood light may be transmitted in either direction through sample 210 and is not limited to being transmitted from first optical fiber 302 downward through sample 210. Detector 308 receives the collected light. A concentration of a particular component in sample 210 may be determined based on the collected light.

In some implementations, controller 212 may cause display of a communication on, for example, a display device, informing the user of the determined electrochemical property of the sample of the micro-liquid of interest. Alternatively, or in addition, controller 212 may output the determined electrochemical properties to one or more external devices, networks, or data storage devices. The data may be provided in raw form, as part of a report, or a combination thereof. One or more alerts may also be generated based on the determined electrochemical property, such as, for example, to warn a user of an error, an out-of-range conductivity, or the like.

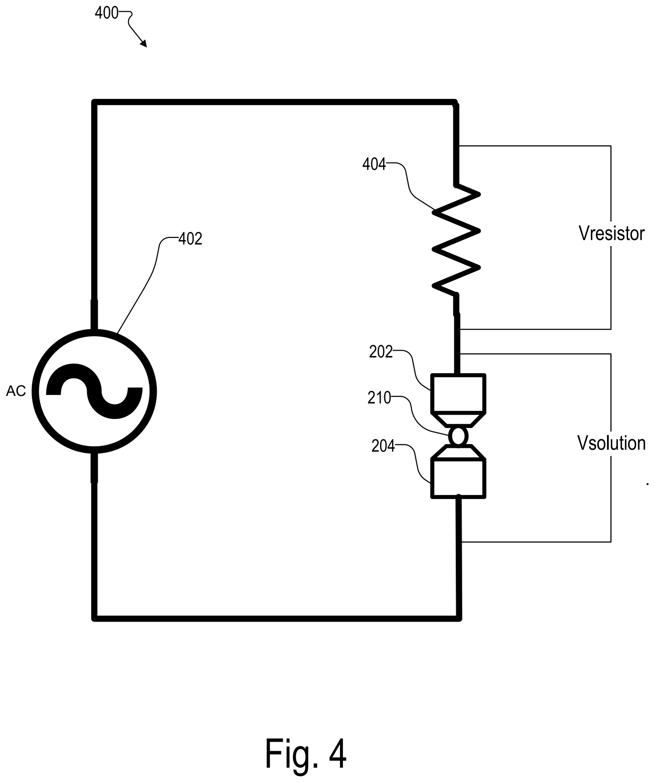

FIG. 4 shows a circuit diagram 400 that may be used to determine conductivity of a sample for temperature measurement purposes. As shown in FIG. 4, an AC voltage source 402 may be configured to supply any suitable AC signal. A first voltage difference (Vresistor) is measured around a resistor 404 and a second voltage difference (Vsolution) is measured around sample 210. Resistor 404 may have any suitable value. For example, resistor 404 may be a 1kΩ resistor in certain examples. For measurements of conductivity, the AC signal applied across sample 210 contains both positive and negative voltages so that ions in sample 210 do not preferentially accumulate on one of the electrodes (e.g., electrode 226 or 228). In addition, the voltage amplitude of the AC signal applied should be sufficiently low enough (e.g., 6V or less) to avoid electrolysis.

With the measured voltage and current passing across sample 210, the resistance of sample 210 may be determined. The conductivity (k) is the resistance (R) of sample 210 weighted by the geometry of the measuring electrodes (referred to as the cell constant), as shown in equation (1) below. The cell constant may be predetermined in a calibration process described in the patent application WO2024173752A1. $κ = \left(\frac{1}{R}\right) \left(Cell Constant\right)$

The electrical signal applied across the sample may have an oscillation frequency. The electrical signal may have any suitable oscillation frequency as may serve a particular implementation. For example, as indicated above, the electrical signal may have a 20kHz oscillation frequency as an AC signal. In certain alternative implementations, a 10kHz oscillation frequency, a 30kHz oscillation frequency, or any other suitable oscillation frequency may be used. The first frequency may be a first frequency component of the electrical signal and the second frequency may be a second frequency component of the electrical signal. The second frequency may be a harmonic of the first frequency. The second frequency may be considered as the first useful additional harmonic (e.g., the third harmonic). To illustrate an example, if the oscillation frequency is 20kHz, the first frequency may correspond to a 20kHz harmonic (e.g., the first harmonic) of a measured voltage of the electrical signal and the second frequency may correspond to a 60kHz harmonic (e.g., the third harmonic) of the electrical signal.

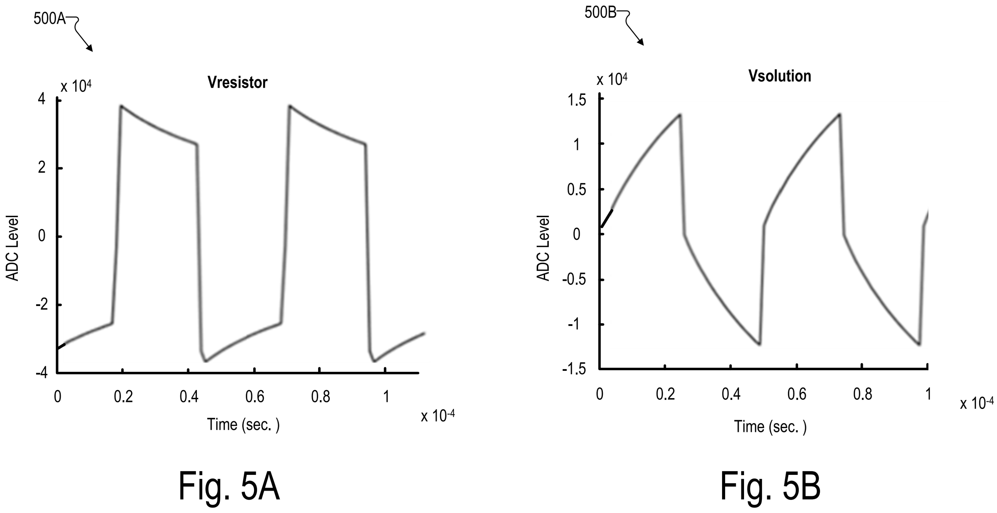

FIGS. 5A and 5B show examples of voltage traces that may be acquired over resistor 404 and sample 210 in certain examples. The example voltage traces shown in FIGS. 5A and 5B are from a conductivity measurement taken on a 2µl droplet of KCl solution by applying a 20kHz square wave. FIG. 5A shows a voltage trace 500A collected over resistor 404 and FIG. 5B shows a voltage trace 500B collected from sample 210. At the oscillation frequency shown in FIGS. 5A and 5B, the interaction of the voltage with resistor 404 and separately with sample 210 causes the recorded waveforms to not be perfect square waves. However, both waveforms shown are consistently periodic and oscillate at a frequency of 20kHz, which facilitates the conductivity and temperature analysis described herein.

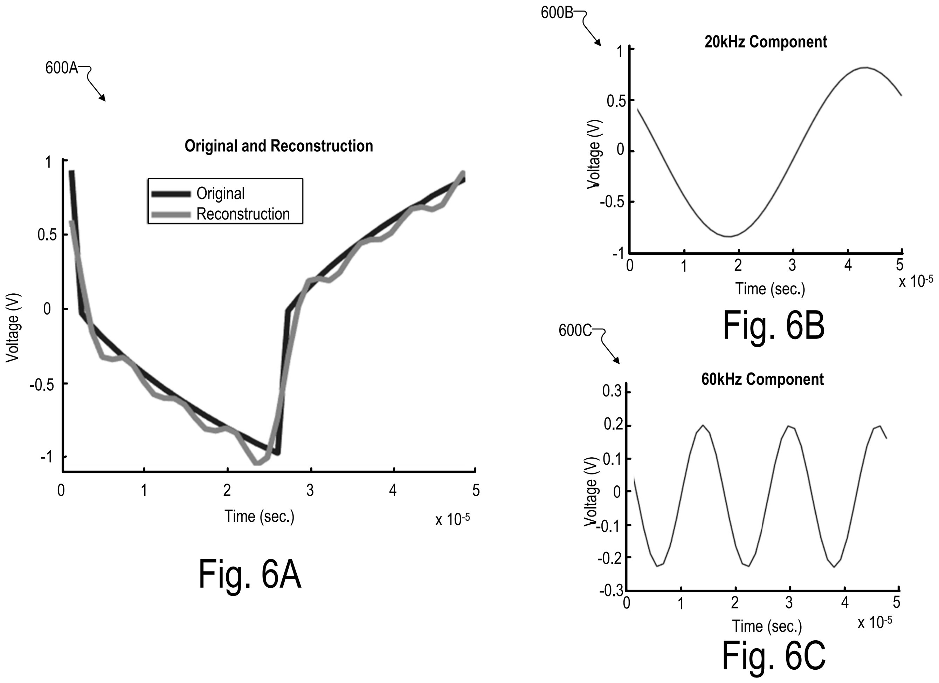

For a given sample, a Fourier analysis may be applied to each of the acquired traces. When examining square wave or square wave-like waveforms, the odd harmonics (n=1,3,5,7...) have the highest contributing content. An example of the Fourier analysis is shown in FIGS. 6A-6C in which the recorded traces from sample 210 were decomposed into multiple harmonics. In FIG. 6A, a chart 600A depicts single period of time dependent voltage collected over sample 210 along with a reconstruction of the data using the (n=1,3,5,7 ...) Fourier components. FIG. 6B includes a chart 600B of the 20kHz component. FIG. 6C shows a chart 600C of the 60kHz component. As shown in FIGS. 6B and 6C, the 20kHz harmonic and the 60kHz harmonic are pure sinusoids. The 100kHz and the 140kHz components are not shown. However, it is understood that they are also pure sinusoids but may include small asymmetries due to the sampling speed of the ADC converter. Each of the frequency components extracted from the electrical signal can be analyzed as if they were independent waveforms.

For the purposes of this description, only the 20kHz and 60kHz components are analyzed over one period of the fundamental frequency. However, it is understood that other fundamental frequencies (e.g., 10kHz, 30kHz, etc.) and/or other combinations of useful harmonics may be analyzed in other implementations to determine conductivities.

Once the harmonic components are extracted from the measured waveform, the actual voltages used in calculating the conductivity are the RMS (Root Mean Square) values (V_{RMS}) shown in equation (2) below. ${V}_{RMS} = \sqrt{\frac{1}{n} {\sum }_{i} {V}_{i}^{2}}$

In equation (2), (n) is the number of data points measured and (Vᵢ) is the voltage at time (i) in, for example, the voltage traces shown in FIGS. 5A and 5B. System 100 is configured to perform this analysis over one period of the fundamental frequency (20kHz) to yield the voltages Vsolution and Vresistor at each of the two frequencies of interest, 20kHz and 60kHz. With these two voltages (Vsolution and Vresistor) calculated at each of the oscillation frequencies, the resistance of the sample (Rsolution) may be calculated with equation (3) below. ${R}_{Solution ,} = \frac{\left({V}_{solution}\right) ∗ \left(1kΩ\right)}{{V}_{Resistor}}$

At each oscillation frequency, the resistance of the solution and the known cell constant may then be inserted into equation (1) to determine the first conductivity and the second conductivity of sample 210. Each oscillation frequency (20kHz and 60kHz) examined with Fourier techniques has its own corresponding value for resistance and conductivity for sample 210.

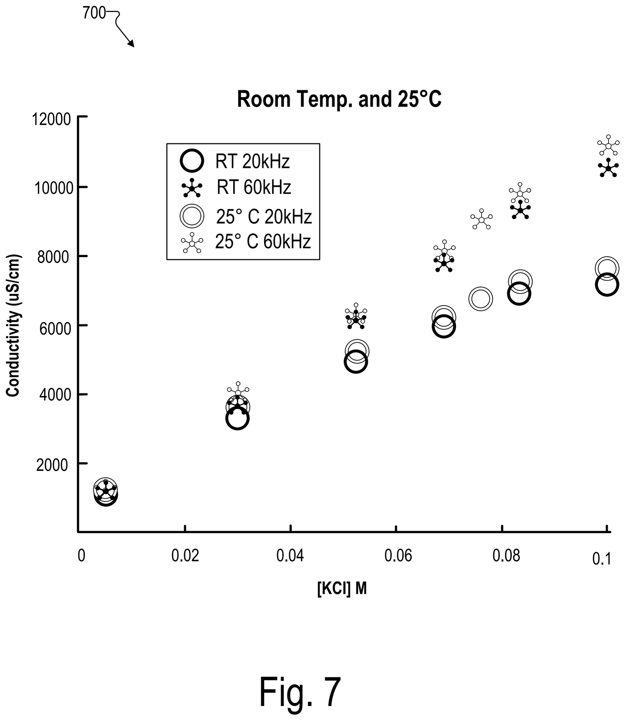

FIG. 7 shows a chart 700 that depicts experimental results where conductivity of various salt solutions were determined at two oscillation frequencies and two temperatures (room temperature ((RT) ~22°C) and 25°C). As shown in FIG. 7, measurements of conductivity at different oscillation frequencies yield different results. For example, the conductivity measured using the faster harmonic (60kHz) is higher than that of the corresponding measurement analyzed at the slower harmonic (20kHz). In addition, the difference (separation) between the conductivity extracted from the 20kHz harmonic and the 60kHz harmonic increases with increasing concentration of the salt solution. For example, the conductivities of the salt solution at a concentration of 0.03M taken at the two frequencies are much closer in number than those collected from the sample having a concentration of 0.12M.

The trend shown in FIG. 7 is consistent even when the temperature of the system changes. In general, the conductivity of a sample scales linearly with temperature. As shown in FIG. 7, the rate of change of conductivity with temperature increases as the number of electrolytes in the sample increases. Because the conductivity of a given sample of electrolytes scales linearly with temperature, the difference in the conductivity between the conductivities measured at 20kHz and 60kHz for a given sample also scales linearly. Therefore, the difference in conductivity between the two measurements of conductivity at two oscillation frequencies (20kHz and 60kHz) is conserved regardless of temperature over the range of conductivities analyzed.

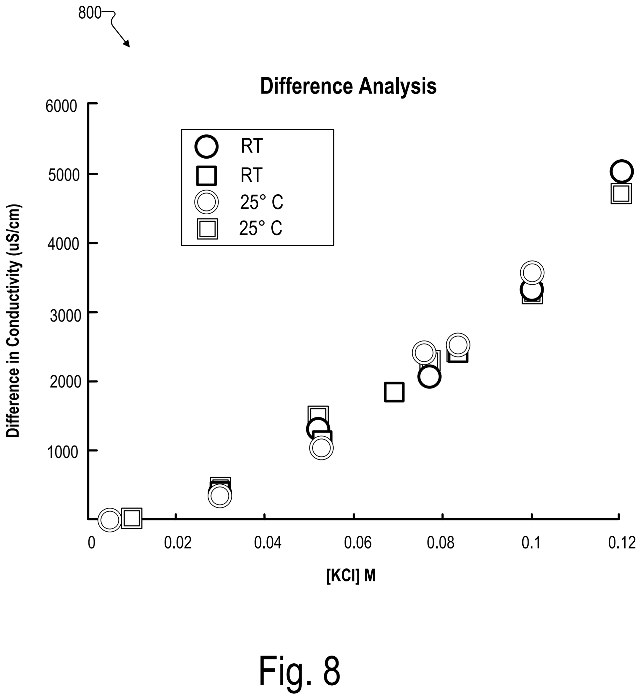

FIG. 8 shows a chart 800 in which the difference in conductivity between the 20kHz and the 60kHz components are plotted for each temperature for a plurality of different salt solutions. In the example shown in FIG. 8, the difference between a measured conductivity at 20kHz and the corresponding conductivity measured at 60kHz increases as the conductivity of the samples increases. In general, the size of this difference in conductivity is conserved for each sample measured, at the temperatures measured. In addition, each of the measured conductivities increases with temperature. As will be described further herein, information such as that shown in FIGS. 7 and 8 may be used as reference data to facilitate determining a temperature of a sample. Although FIG. 8 shows data associated with different concentration salt solutions, it is understood that the results shown in FIG. 8 represent a calibration curve that may be used to analyze differences in conductivity for different concentrations of other solutions (e.g., Lysogeny Broth (LB), phosphate-buffered saline (PBS), Tris-EDTA buffer (TE), etc.).

In practice, a sample will be measured without knowing beforehand the sample's conductivity or the precise temperature of the sample at the time of measurement. In addition, the ionic concentration of the sample may not be known beforehand. Instead, system 100 is configured to determine the first conductivity and the second conductivity of the sample such as described herein to facilitate determining the temperature of a sample.

In instances where the ionic concentration is not known, system 100 may determine the ionic concentration of the sample. This may be accomplished in any suitable manner. For example, system 100 may compare a difference between the first conductivity and the second conductivity to reference data such as that shown in FIG. 8. With the difference in conductivity, it is possible to estimate the ionic concentration based on where the difference in conductivity falls on the calibration curve in the reference data shown in FIG. 8. To illustrate an example, system 100 may determine that the difference in the conductivities is approximately 3500uS/cm. Based on this, system 100 may determine that the ionic concentration of the sample is 0.1M based on 0.1M being below 3500 on the calibration curve of the data shown in FIG. 8.

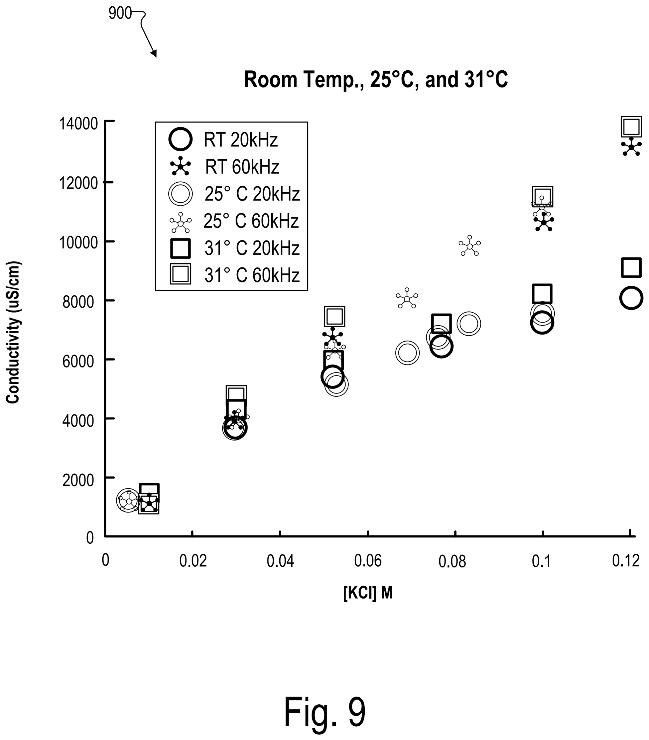

Based on the ionic concentration, system 100 may determine the temperature of the sample based on a comparison of a first magnitude of the first conductivity and/or a second magnitude of the second conductivity to additional reference data. FIG. 9 shows a chart 900 that includes example reference data that may be used to determine the temperature of the sample. With the information shown in FIG. 9, the magnitudes of the first conductivity and the second conductivity may be plotted against the reference measurements shown in FIG. 9 to determine the temperature. This may be accomplished in any suitable manner. For example, system 100 may generate a plurality of calibration curves based on the reference data represented in FIG. 9. To illustrate, at a concentration of 0.1M, the black circle, the white circle, and the black square indicate that the conductivity at 20kHz increases with temperature. Based on this relationship, system 100 may generate a first calibration curve for the 20kHz data at 0.1M concentration to determine the temperature of the sample at that concentration and magnitude of conductivity. For example, if the magnitude of the first conductivity for a 0.1M sample is closer to 8000uS/cm, system 100 may determine that the temperature is 31°C. On the other hand, if the magnitude of the first conductivity for a 0.1M sample is closer to 6000uS/cm, system 100 may determine that the temperature of the sample is RT or less. System 100 may generate different calibration curves for each of the clusters of data represented FIG. 9. For example, system 100 may generate a second calibration curve for 60kHz data at 0.1M concentration (e.g., the data indicated by the white square, the white star, and the black star at 0.1M). Likewise, system 100 may generate additional calibration curves for other concentrations/frequencies data represented in FIG. 9.

In certain examples, for each of the 20kHz and 60kHz components, a global linear fit may be applied to estimate the conductivity vs. temperature curve for the reference data taken at RT, 25°C, and 31°C. The measured conductivities at 20kHz and 60kHz may then be compared to these curves to determine temperature. This may be done, for example, by determining where the difference between the measured points and reference points are at a minimum. However, any other suitable algorithm may be used in alternative implementations.

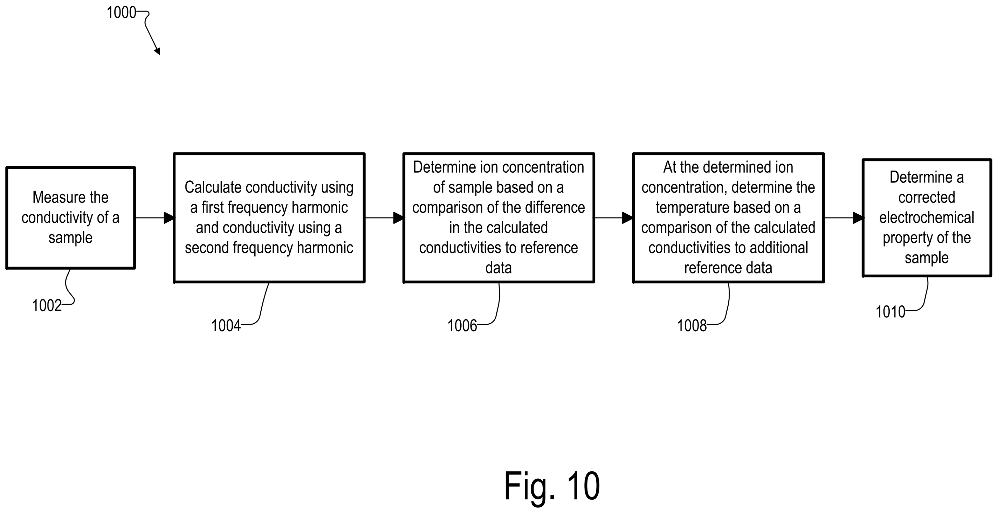

FIG. 10 illustrates an example flow diagram 1000 depicting various operations that may be performed by system 100 in determining a temperature of a sample. As shown in FIG. 10, system 100 may measure the conductivity of a sample at operation 1002. Operation 1002 may be performed in any of the ways described herein.

At operation 1004, system 100 may calculate the conductivity of the sample using a first frequency harmonic and the conductivity of the sample using a second frequency harmonic. Operation 1004 may be performed in any of the ways described herein. For example, the first frequency harmonic may be a 20kHz component of an AC signal applied across the sample and the second frequency harmonic may be a 60kHz component of the AC signal.

At operation 1006, system 100 may determine an ion concentration of the sample based on a comparison of the difference in the conductivities calculated at operation 1004 to reference data. Operation 1006 may be performed in any of the ways described herein. For example, the reference data may include information similar to that shown in FIG. 8. System 100 may determine the ionic concentration along the x-axis based on where the difference in conductivity falls on a calibration curve that is associated with the datapoints shown in FIG. 8.

At operation 1008, system 100 may, at the determined concentration, determine the temperature based on a comparison of the calculated conductivities to additional reference data. Operation 1008 may be performed in any of the ways described herein. For example, the additional reference data may include data such as that shown in FIG. 9. System 100 may use information such as that shown in FIG. 9 to generate a calibration curve that correlates temperature and conductivity for a given ionic concentration.

At operation 1010, system 100 may determine a corrected electrochemical property for the sample at a baseline temperature (e.g., 25°C). The baseline temperature is a predetermined reference temperature at which an electrochemical property of a sample is normalized or reported, independent of the actual temperature at which the sample is measured. For example, system 100 may determine a corrected conductivity for the sample, a corrected pH for the sample, and/or any other suitable corrected electrochemical property based on the determined sample temperature at 1008. The corrected electrochemical property can be generated via mathematical calculation or based on reference data. The system may provide to the user an indication of the corrected electrochemical property of the sample at the baseline temperature.

For example, system 100 corrects the measured conductivity based on the temperature coefficient when the determined sample temperature is not higher than 37°C. When determining a corrected conductivity, system 100 may determine the temperature coefficient of variation (α_{c}), which describes how the conductivity of the sample measured at the reference temperature changes per unit temperature (typically 1°C). According to the industry standard, (α_{c}) is set to equal to 2%. A value of 2% for (α_{c}) is representative of the majority of ion-based biological buffers being used. In addition, temperatures are practically assumed to be less than 37°C. Both assumptions are consistent with the anticipated and common usage of the sample analytic devices, allowing for the use of 2% for (α_{c}). With a fixed value for (α_{c}), the following equation (4) may be used to determine the conductivity corrected to 25°C (C₂₅), based on the measured conductivity (Cₘₑₐₛ). ${C}_{25} = \frac{{C}_{Meas}}{1 + \left(\frac{{α}_{c}}{100}\right) \left({T}_{meas}-25\right)}$

The variable (Tₘₑₐₛ) is the temperature at which the conductivity of the sample was actually measured at. This equation enforces a linear relationship between the measured conductivity and temperature. As mentioned, this relationship is valid for the majority of ion-based buffers measured at temperatures below 37°C.

In another example, in instances where measurements are needed outside of the previously mentioned temperature range (e.g., greater than 37°C), the linearity between temperature and measured conductivity may fail. Therefore, the conductivity of a sample at these higher temperatures may be corrected based on reference data, such as calibration curve(s) generated using a reference sample. The reference sample may be selected to be similar to the possible composition of the sample of interest (i.e., the sample of which the conductivity is measured). For example, the sample of interest are proteins in PBS solution. A calibration curve for this sample of interest may be obtained by measuring the conductivities of the PBS solution at various temperatures. For samples with a temperature higher than 37°C, the calibration curve may be generated by fitting the conductivity vs. temperature data of the reference sample with complicated polynomials in order to extract the relationship between conductivity and temperature that can be directly used for the correction of the conductivity.

In some examples, pH level of the sample is measured by acquiring the open circuit signal of the sample, as presented in the patent application WO2024173752A1. The temperature of the sample may be determined using the method of diagram 1000 before or after the pH measurement. To correct the measured pH based on the sample's temperature, system 100 may compare the measured data to pre-generated pH vs. temperature dataset curves. The curves may be measured a priori from multiple reference samples of known pH values at various temperatures. The fit of the pH vs. temperature for a given sample of interest is informative of the amount of change in the pH values to correct the measured pH to a baseline temperature. When the pH and temperature are measured on the same sample and the sample has a reference (pH vs. temperature) dataset, an analysis of the curve yields the change in the pH value based on the difference between the pH value located at the measured temperature and the pH value located at the baseline temperature.

In certain examples, system 100 may be configured to provide a user with information associated with properties of a sample. This may be accomplished in any suitable manner. For example, system 100 may provide, for display to a user by way of a display device, one or more graphical user interface (GUI) views with information indicating any suitable property associated with the sample. In certain implementations, system 100 may be configured to provide, for presentation to a user, an indication of the determined temperature of the sample. Additionally or alternatively, system 100 may be configured to provide, for presentation to a user, an indication of the conductivity of a sample at the determined temperature. In such examples, system 100 may be configured to determine a conductivity of the sample at the determined temperature in any suitable manner such as described herein.

Additionally or alternatively, system 100 may be configured to provide for display to a user a corrected electrochemical property for the sample at a baseline temperature (e.g., 25°C, room temperature, etc.). For example, system 100 may display a corrected conductivity for the sample, a corrected pH for the sample, and/or any other suitable corrected electrochemical property.

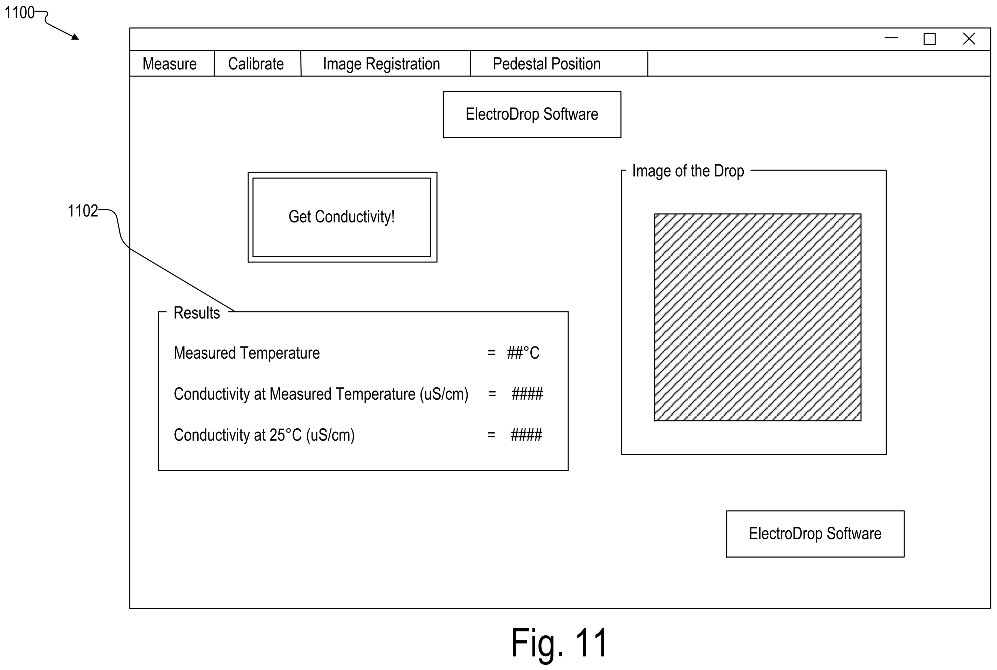

FIG. 11 illustrates and example graphical user interface view 1100 that may be provided for display to a user to report results of temperature and conductivity measurements for a sample. As shown in FIG. 11, graphical user interface view 1100 includes a results pane 1102 that provides information regarding the measured temperature of the sample, the conductivity of the sample at the measured temperature, and a corrected conductivity of the sample at a baseline temperature of 25°C.

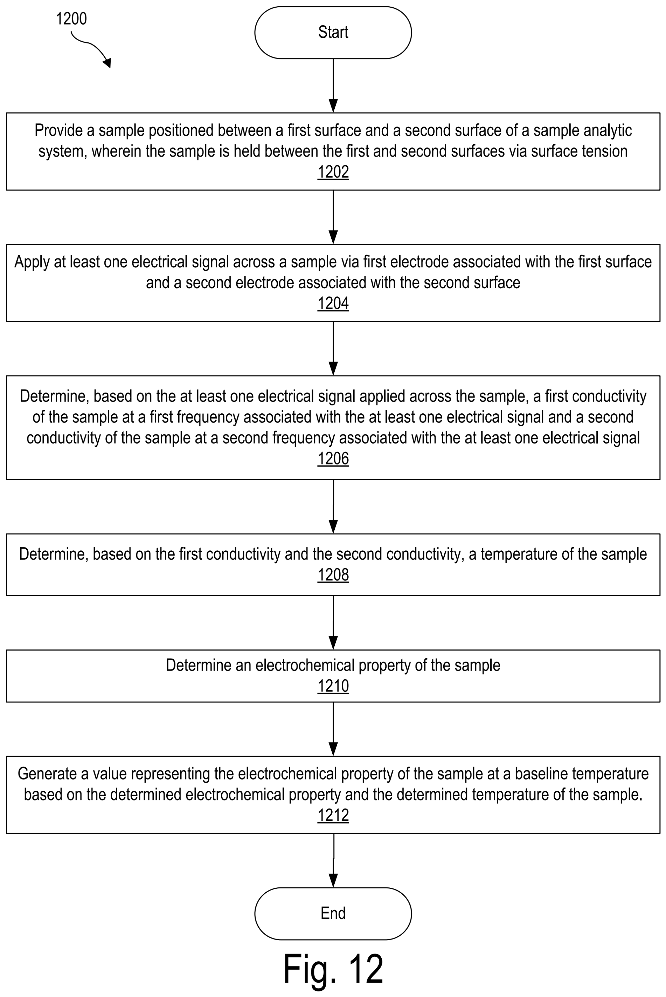

FIG. 12 illustrates an example method 1200 for analyzing a microvolume sample. While FIG. 12 illustrates example operations according to one embodiment, other implementations may omit, add to, reorder, and/or modify any of the operations shown in FIG. 12. One or more of the operations shown in FIG. 12 may be performed by a system such as system 100, any components included therein, and/or any implementation thereof.

At operation 1202, a sample is positioned between a first surface and a second surface of a sample analytic system (e.g., sample analytic system 100), wherein the sample is held between the first and second surfaces via surface tension. Operation 1202 may be performed in any of the ways described herein. In certain examples, system 100 may determine whether the sample is positioned between the first surface and the second surface. For example, system 100 may confirm that the sample is in contact with conductive portions of the pedestals (e.g., pedestals 202/204) of a sample analytic device based on an electrical signal applied across the sample. Additionally or alternatively, system 100 may analyze images captured by a camera (e.g., camera 218) to determine whether the sample is positioned between the first surface and the second surface.

At operation 1204, a sample analytic system (e.g., sample analytic system 100) may apply at least one electrical signal across a sample via a first electrode associated with the first surface and a second electrode associated with the second surface. Operation 1204 may be performed in any of the ways described herein.

At operation 1206, the sample analytic system may determine, based on the at least one electrical signal applied across the sample, a first conductivity of the sample at a first frequency associated with the at least one electrical signal and a second conductivity of the sample at a second frequency associated with the at least one electrical signal. Operation 1206 may be performed in any of the ways described herein.

At operation 1208, the sample analytic system may determine, based on the first conductivity and the second conductivity, a temperature of the sample. Operation 1208 may be performed in any of the ways described herein.

At operation 1210, the sample analytic system may determine an electrochemical property of the sample. Operation 1210 may be performed in any of the ways described herein.

At operation 1212, the sample analytic system may generate a value representing the electrochemical property of the sample at a baseline temperature based on the determined electrochemical property and the determined temperature of the sample.

In some examples, a non-transitory computer-readable medium storing computer-readable instructions may be provided in accordance with the principles described herein. The instructions, when executed by a processor of a computing device, may direct the processor and/or computing device to perform one or more operations, including one or more of the operations described herein. Such instructions may be stored and/or transmitted using any of a variety of known computer-readable media.

A non-transitory computer-readable medium as referred to herein may include any non-transitory storage medium that participates in providing data (e.g., instructions) that may be read and/or executed by a computing device (e.g., by a processor of a computing device). For example, a non-transitory computer-readable medium may include, but is not limited to, any combination of non-volatile storage media and/or volatile storage media. Illustrative non-volatile storage media include, but are not limited to, read-only memory, flash memory, a solid-state drive, a magnetic storage device (e.g., a hard disk, a floppy disk, magnetic tape, etc.), ferroelectric random-access memory ("RAM"), and an optical disc (e.g., a compact disc, a digital video disc, a Blu-ray disc, etc.). Illustrative volatile storage media include, but are not limited to, RAM (e.g., dynamic RAM).

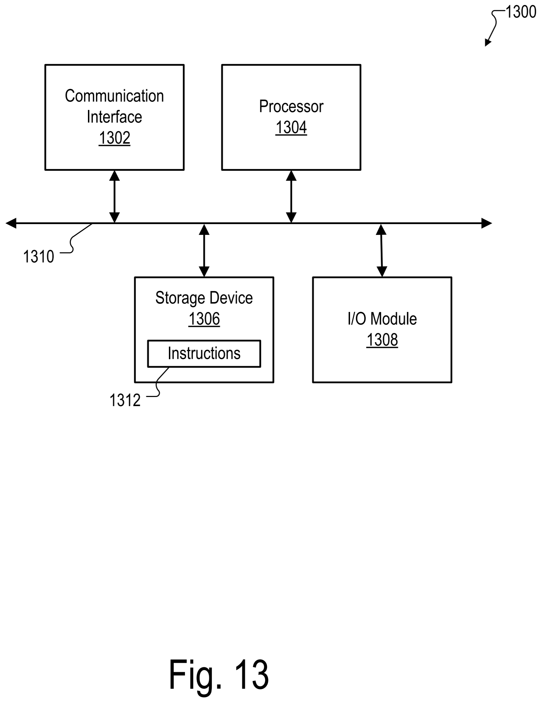

FIG. 13 illustrates an example computing device 1300 that may be specifically configured to perform one or more of the processes described herein. As shown in FIG. 13, computing device 1300 may include a communication interface 1302, a processor 1304, a storage device 1306, and an input/output ("I/O") module 1308 communicatively connected one to another via a communication infrastructure 1310. While an example computing device 1300 is shown in FIG. 13, the components illustrated in FIG. 13 are not intended to be limiting. Additional or alternative components may be used in other implementations. Components of computing device 1300 shown in FIG. 13 will now be described in additional detail.

Communication interface 1302 may be configured to communicate with one or more computing devices. Examples of communication interface 1302 include, without limitation, a wired network interface (such as a network interface card), a wireless network interface (such as a wireless network interface card), a modem, an audio/video connection, and any other suitable interface.

Processor 1304 generally represents any type or form of processing unit capable of processing data and/or interpreting, executing, and/or directing execution of one or more of the instructions, processes, and/or operations described herein. Processor 1304 may perform operations by executing computer-executable instructions 1312 (e.g., an application, software, code, and/or other executable data instance) stored in storage device 1306.

Storage device 1306 may include one or more data storage media, devices, or configurations and may employ any type, form, and combination of data storage media and/or device. For example, storage device 1306 may include, but is not limited to, any combination of the non-volatile media and/or volatile media described herein. Electronic data, including data described herein, may be temporarily and/or permanently stored in storage device 1306. For example, data representative of computer-executable instructions 1312 configured to direct processor 1304 to perform any of the operations described herein may be stored within storage device 1306. In some examples, data may be arranged in one or more databases residing within storage device 1306.

I/O module 1308 may include one or more I/O modules configured to receive user input and provide user output. One or more I/O modules may be used to receive input for a single virtual experience. I/O module 1308 may include any hardware, firmware, software, or combination thereof supportive of input and output capabilities. For example, I/O module 1308 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 1308 may include one or more devices for presenting output to a user, including, but not limited to, a graphics engine, a display (e.g., a display screen), one or more output drivers (e.g., display drivers), one or more audio speakers, and one or more audio drivers. In certain implementations, I/O module 1308 is configured to provide graphical data to a display for presentation to a user. The graphical data may be representative of one or more graphical user interfaces and/or any other graphical content as may serve a particular implementation.

In some examples, any of the systems, computing devices, and/or other components described herein may be implemented by computing device 1300. For example, processor 108, controller 212, and/or electronic processing unit 222 may be implemented by processor 1304.

Advantages and features of the present disclosure may be further described by the following statements:
1. A system for analyzing a sample, comprising: a first surface including at least a part of a first electrode; a second surface including at least a part of a second electrode, the second surface positioned opposite the first surface for holding the sample between the first surface and the second surface by surface tension; and an electronic processing unit configured to: apply at least one electrical signal across the sample via the first electrode and the second electrode; determine, based on the at least one electrical signal applied across the sample, a first conductivity of the sample at a first frequency associated with the at least one electrical signal and a second conductivity of the sample at a second frequency associated with the at least one electrical signal; and determine, based on the first conductivity and the second conductivity, a temperature of the sample.
2. The system of the preceding statement, wherein the applying of the at least one electrical signal includes applying an AC electrical signal across the sample.
3. The system of any of the preceding statements, wherein: the at least one electrical signal includes an electrical signal having multiple frequency components; the first frequency is a first frequency component of the multiple frequency components; and the second frequency is a second frequency component of the multiple frequency components.
4. The system of claim 1, wherein the at least one electrical signal includes a first electrical signal and a second electrical signal, and the determining of the first conductivity of the sample at the first frequency associated with the at least one electrical signal and the second conductivity of the sample at the second frequency associated with the at least one electrical signal
5. The system of statements 1-3, wherein the second frequency is a harmonic of the first frequency.
6. The system of any of the preceding statements, wherein: the electronic processing unit is further configured to determine an ionic concentration of the sample; and the determining of the temperature of the sample is based on the determining of the ionic concentration of the sample.
7. The system of the preceding statement, wherein the determining of the ionic concentration of the sample comprises: determining a difference between the first conductivity and the second conductivity; and determining, based on a comparison of the difference to reference data, the ionic concentration of the sample.
8. The system of any of the preceding statements, wherein the determining of the temperature of the sample comprises: determining a first magnitude of the first conductivity and a second magnitude of the second conductivity; and determining the temperature of the sample based on a comparison of the first magnitude and the second magnitude to additional reference data.
9. The system of any of the preceding statements, wherein the electronic processing unit is further configured to provide, for presentation to a user, an indication of the determined temperature of the sample.
10. The system of any of the preceding statements, wherein the electronic processing unit is further configured to: determine, based on the first conductivity and/or the second conductivity, a conductivity of the sample at the determined temperature; and provide, for presentation to a user, an indication of the conductivity of the sample at the determined temperature.
11. The system of any of the preceding statements, wherein the electronic processing unit is further configured to: determine, an electrochemical property of the sample at the determined temperature; determine a corrected electrochemical property of the sample at a baseline temperature based on the electrochemical property of the sample at the determined temperature and the determined temperature; and provide, for presentation to a user, an indication of the corrected electrochemical property of the sample at the baseline temperature.
12. The system of the preceding statement, wherein the electrochemical property includes conductivity, and the determining of the electrochemical property of the sample at the determined temperature includes determining the conductivity of the sample at the determined temperature based on the first conductivity and/or the second conductivity.
13. The system of statement 11, wherein the electrochemical property includes pH value, and the determining of the electrochemical property of the sample at the determined temperature includes conducting pH measurement of the sample at the determined temperature.
14. A computer program product embodied in a non-transitory computer readable storage medium and comprising computer instructions for performing a process comprising: determining that a sample is positioned between a first surface and a second surface, wherein the sample is held between the first and second surfaces via surface tension; applying at least one electrical signal across a sample via a first electrode associated with the first surface and a second electrode associated with the second surface; determining, based on the at least one electrical signal applied across the sample, a first conductivity of the sample at a first frequency associated with the at least one electrical signal and a second conductivity of the sample at a second frequency associated with the at least one electrical signal; and determining, based on the first conductivity and the second conductivity, a temperature of the sample.
15. The computer program product of the preceding statement, wherein the applying of the at least one electrical signal includes applying an AC electrical signal across the sample.
16. The computer program product of the preceding statement, wherein: the AC electrical signal has multiple frequency components; the first frequency is a first frequency component of the multiple frequency components; and the second frequency is a second frequency component of the multiple frequency components.
17. The computer program product of statement 14, wherein the second frequency is a harmonic of the first frequency.
18. The computer program product of any of the preceding statements, wherein: the process further comprising determining an ionic concentration of the sample; and the determining of the temperature of the sample is based on the determining of the ionic concentration of the sample.
19. The computer program product of the preceding statement, wherein the determining of the ionic concentration of the sample comprises: determining a difference between the first conductivity and the second conductivity; and determining, based on a comparison of the difference to reference data, the ionic concentration of the sample.
20. The computer program product of any of the preceding statements, wherein the determining of the temperature of the sample comprises: determining a first magnitude of the first conductivity and a second magnitude of the second conductivity; and determining the temperature of the sample based on a comparison of the first magnitude and the second magnitude to additional reference data.
21. The computer program product of any of the preceding statements, wherein the process further comprises: determining, based on the first conductivity and the second conductivity, a conductivity of the sample at the determined temperature.
22. The computer program product of the preceding statement, wherein the process further comprises: determining, based on the determined temperature and the conductivity of the sample at the determined temperature, a corrected conductivity for the sample at a baseline temperature; and providing, for presentation to the user, an indication of the corrected conductivity of the sample at the baseline temperature.
23. A method for measuring an electrochemical property of a sample, comprising: providing a sample positioned between a first surface and a second surface of a sample analytic system, wherein the sample is held between the first and second surfaces via surface tension; applying, by the sample analytic system, at least one electrical signal across the sample via first electrode associated with the first surface and a second electrode associated with the second surface; determining, by the sample analytic system and based on the at least one electrical signal applied across the sample, a first conductivity of the sample at a first frequency associated with the at least one electrical signal and a second conductivity of the sample at a second frequency associated with the at least one electrical signal; determining, by the sample analytic system and based on the first conductivity and the second conductivity, a temperature of the sample; determining, by the sample analytic system, an electrochemical property of the sample; and generating, by the sample analytic system, a value representing the electrochemical property of the sample at a baseline temperature based on the determined electrochemical property and the determined temperature of the sample.
24. The method of the preceding statement, wherein the applying of the at least one electrical signal includes applying an AC electrical signal across the sample.
25. The method of any of the preceding statements, wherein: the at least one electrical signal has multiple frequency components; the first frequency is a first frequency component of the multiple frequency components; and the second frequency is a second frequency component of the multiple frequency components.
26. The method of the preceding statement, wherein the second component of the oscillation frequency is a harmonic of the first frequency.
27. The method of any of the preceding statements, further comprising determining, by the sample analytic system, an ionic concentration of the sample, wherein the determining of the temperature of the sample is based on the determining of the ionic concentration of the sample.
28. The method of the preceding statement, wherein the determining of the ionic concentration of the sample comprises: determining a difference between the first conductivity and the second conductivity; and determining, based on a comparison of the difference to reference data, the ionic concentration of the sample.
29. The method of any of the preceding statements, wherein the determining of the temperature of the sample comprises: determining a first magnitude of the first conductivity and a second magnitude of the second conductivity; and determining the temperature of the sample based on a comparison of the first magnitude and the second magnitude to the additional reference data.
30. The method of preceding statement 23, wherein the determining of the electrochemical property includes measuring a pH value and/or a conductivity of the sample.
31. The method of statement 23, wherein the second frequency is higher than 50kHz and the first frequency is not greater than 50kHz.
32. The method of claim 31, wherein the difference between the first frequency and the second frequency is not less than 20kHz.

The above-indicated and possibly some other related problems in the state of the art may beneficially be addressed using various examples, aspects, features, and implementations of systems and methods disclosed herein. Accordingly, incorporating temperature detection into a system and method for measuring electrochemical properties of a liquid sample is a solution to technological problems solved through the use of particular computing systems and devices. Thus, implementations disclosed herein provide improvements to measurements of electrochemical properties of liquid samples (e.g., improvements in the computer technology supporting such measuring functionality, among other improvements).

As described above in the detailed description, reference is made to the accompanying drawings that form a part hereof wherein like numerals designate like parts throughout, and in which is shown, by way of illustration, implementations that may be practiced. It is to be understood that other implementations may be utilized, and structured or logical changes may be made, without departing from the scope of the present disclosure. Therefore, detailed description as described above is not to be taken in a limiting sense.

Various operations may be described as multiple discrete actions or operations in turn, in a manner that is most helpful in understanding the subject matter disclosed herein. However, the order of description should not be construed as to imply that these operations are necessarily order dependent. In particular, these operations may not be performed in the order of presentation. Operations described may be performed in a different order from the described embodiment. Various additional operations may be performed, and/or described operations may be omitted in additional implementations.

For the purpose of the present disclosure, the phrases "A and/or B" and "A or B" mean (A), (B), or (A and B). For the purposes of the present disclosure, the phrases "A, B, and/or C" and "A, B, or C" mean (A), (B), (C), (A and B), (A and C), or (A, B, and C). Although some elements may be referred to in the singular (e.g., "a processing device"), any appropriate elements may be represented by multiple instances of those elements, and vice versa. For example, a set of operations described as performed by a processing device may be implemented with different ones of the operations performed by different processing devices.

The description uses the phrases "an embodiment," "various embodiments," and "some embodiments," each of which may refer to one or more of the same or different embodiments or implementations. Furthermore, the terms "comprising," "including," "having," and the like, as used with respect to implementations of the present disclosure, are synonyms. When used to describe a range of values, the phrase "between X and Y" represents a range that includes X and Y. As used herein, an "apparatus" and/or "system" may refer to any individual device, collection of devices, part of a device, or collections of parts of devices. The drawings are not necessarily to scale.

## Claims

1. A system for analyzing a sample, comprising:
a first surface including at least a part of a first electrode;
a second surface including at least a part of a second electrode, the second surface positioned opposite the first surface for holding the sample between the first surface and the second surface by surface tension; and
an electronic processing unit configured to:
apply at least one electrical signal across the sample via the first electrode and the second electrode;
determine, based on the at least one electrical signal applied across the sample, a first conductivity of the sample at a first frequency associated with the at least one electrical signal and a second conductivity of the sample at a second frequency associated with the at least one electrical signal; and
determine, based on the first conductivity and the second conductivity, a temperature of the sample.

2. The system of claim 1, wherein:
the at least one electrical signal includes an electrical signal having multiple frequency components;
the first frequency is a first frequency component of the multiple frequency components; and
the second frequency is a second frequency component of the multiple frequency components.

3. The system of claim 1, wherein the at least one electrical signal includes a first electrical signal and a second electrical signal, and the determining of the first conductivity of the sample at the first frequency associated with the at least one electrical signal and the second conductivity of the sample at the second frequency associated with the at least one electrical signal includes:
responsive to applying the first electrical signal, determine the first conductivity at the first frequency associated with the first electrical signal and the second conductivity at the second frequency associated with the second electrical signal.

4. The system of any of claims 1-3, wherein the second frequency is a harmonic of the first frequency.

5. The system of any of claims 1-4, wherein:
the electronic processing unit is further configured to determine an ionic concentration of the sample; and
the determining of the temperature of the sample is based on the determining of the ionic concentration of the sample.

6. The system of claim 5, wherein the determining of the ionic concentration of the sample comprises:
determining a difference between the first conductivity and the second conductivity; and
determining, based on a comparison of the difference to reference data, the ionic concentration of the sample.

7. The system of any of claims 1-6, wherein the determining of the temperature of the sample comprises:
determining a first magnitude of the first conductivity and a second magnitude of the second conductivity; and
determining the temperature of the sample based on a comparison of the first magnitude and the second magnitude to additional reference data.

8. The system of any of claims 1-7, wherein the electronic processing unit is further configured to:
determine, based on the first conductivity and/or the second conductivity, a conductivity of the sample at the determined temperature; and
provide, for presentation to a user, an indication of the conductivity of the sample at the determined temperature.

9. The system of any of claims 1-8, wherein the electronic processing unit is further configured to:
determine, an electrochemical property of the sample at the determined temperature;
determine a corrected electrochemical property of the sample at a baseline temperature based on the electrochemical property of the sample at the determined temperature and the determined temperature; and
provide, for presentation to a user, an indication of the corrected electrochemical property of the sample at the baseline temperature.

10. The system of claim 9, wherein the electrochemical property includes conductivity, and the determining of the electrochemical property of the sample at the determined temperature includes determining the conductivity of the sample at the determined temperature based on the first conductivity and/or the second conductivity.

11. The system of claim 9, wherein the electrochemical property includes pH value, and the determining of the electrochemical property of the sample at the determined temperature includes conducting pH measurement of the sample at the determined temperature.

12. A method for measuring an electrochemical property of a sample, comprising:
providing a sample positioned between a first surface and a second surface of a sample analytic system, wherein the sample is held between the first and second surfaces via surface tension;
applying, by the sample analytic system, at least one electrical signal across the sample via a first electrode associated with the first surface and a second electrode associated with the second surface;
determining, by the sample analytic system and based on the at least one electrical signal applied across the sample, a first conductivity of the sample at a first frequency associated with the at least one electrical signal and a second conductivity of the sample at a second frequency associated with the at least one electrical signal;
determining, by the sample analytic system and based on the first conductivity and the second conductivity, a temperature of the sample;
determining, by the sample analytic system, an electrochemical property of the sample; and
generating, by the sample analytic system, a value representing the electrochemical property of the sample at a baseline temperature based on the determined electrochemical property and the determined temperature of the sample.

13. The method of claim 12, wherein:
the at least one electrical signal has multiple frequency components;
the first frequency is a first frequency component of the multiple frequency components; and
the second frequency is a second frequency component of the multiple frequency components.

14. The method of claim 13, wherein the second frequency is higher than 50kHz and the first frequency is not greater than 50kHz.

15. The method of claim 14, wherein the difference between the first frequency and the second frequency is not less than 20kHz.
